# EUROPEAN PATENT SPECIFICATION

(11) **EP 4 408 341 B1**
(45) Date of publication and mention of the grant of the patent: **14.10.2026**
(21) Application number: 22793218.3
(22) Date of filing: 27.09.2022
(51) Int. Cl.: A61C 17/02

(54) **DENTAL IRRIGATOR**
ZAHNSPÜLER
IRRIGATEUR DENTAIRE

(30) Priority: 29.09.2021 GR 20210100646
(43) Date of publication of application: 07.08.2024
(73) Proprietor: IMPLANTSCI LTD., Aradippou Larnaca 7101 (CY)
(72) Inventor: PAPADOPOULOS, Georgios, 7041 Oroklini (CY); KOTSAKIS, Georgios, 12135 Athens (GR); VERGOULLIS, Ioannis, 85100 Rhodes (GR)
(74) Representative: Kilimiris, Constantinos
(86) International application number: PCT/GR2022/000051
(87) International publication number: WO 2023/052796

(56) References cited:
- CN-U- 203 564 361
- KR-U- 20130 005 839
- US-A1- 2009 317 758
- US-A1- 2015 118 645

## Description

### TECHNICAL FIELD

This invention belongs to the field of tools used by dentists for performing operations, and more particularly, to intra-oral irrigators.

### STATE OF THE ART

Intra-oral irrigators are well known in the technical field of dental practice. These are devices which uses a stream of high-pressure pulsating water intended to remove plaque and food debris between teeth and below the gum line.

These devices may be used by dental professionals or by users. In the first case, an integration with the elements used by the dental practitioner in their daily routine is desirable.

Further, not every irrigator is suitable for every patient. The removal of the teeth and/or dental implant biofilm must be done in such a way not to create dental conditions or affecting the patient's teeth and/or dental implants in any negative form.

In the field of dental devices, there are a multitude of devices which are used for achieving tasks which are somehow related to the two ones mentioned above.

Document US 2015/118645 A1 discloses a dental irrigator which has been modified to be used for dispensing materials (other than water, e.g., a gel) through the tip.

Document KR 2013 0005839 U discloses does not disclose a dental irrigator either, but an accessory part to be installed in a water tap. Therefore, it cannot be used by a dental practitioner in a portable way as the present invention does.

Document US 2009/317758 A1 discloses a dental irrigator with air and water. The use of air increases the risk of causing emphysemas in the sensitive gingival tissue.

An alternative for the known irrigators, focused on these two questions, is provided in the present invention.

### DESCRIPTION OF THE INVENTION

The invention provides an alternative solution for this problem by means of a dental irrigator as defined in the appended claims 1 to 12.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

The claimed invention refers to a dental irrigator comprising
a connection portion comprising a water inlet;
a main body comprising a first end with a first connection element configured to couple with the connection portion and a second end opposite to the first end, the second end comprising a second connection element which extends from a main step of the main body, the second connection element comprising an inner connection surface and an outer connection surface, the main body being configured to let water pass from the first end to the second end;
a working tip, the working tip comprising a first portion configured to be connected to the inner connection surface and a second portion configured to project the water outside the dental irrigator; and
an intermediate connector, arranged to manage the connection between the first portion of the working tip and the second connection element of the main body.

With such a dental irrigator, a good cleaning of the sub-gingival zone may be achieved, since it does not use air, so the possibility of emphysema is reduced. To do so, a high pressure of the water is needed, usually higher than the standard pressure of dental chairs. The intermediate connector ensures that the working tip resists this high water pressure and does not disconnect from the main body.

The dental irrigator further comprises an elastic element arranged around the outer connection surface;
the second connection element of the main body a stop element which prevents the intermediate connector from escaping from the dental irrigator;
the intermediate connector comprises an interior step configured to receive the elastic element and an end intended to be abutted against the stop element, the interior step being oriented so that the elastic element exerts a force which intends to push the intermediate connector towards the stop element;
the length of the outer connection surface is greater than the distance between the interior step and the end of the intermediate connector;
the first portion of the working tip comprises a first engaging element; and
the second connection element further comprises at least one second engaging element configured to engage with the first engaging element.

This configuration with the engaging elements and the elastic element ensures that when the intermediate connector is in the blocking position (when released and pressed by the elastic element), the working tip is engaged by an element which is not a mere press fit connection.

In some particular embodiments,
the first engaging element is at least a portion of a groove;
the second engaging element is at least one ball configured to be partially inserted in the at least one portion of a groove, the ball being located at a distance from the main step which is greater than the distance between the interior step and the end of the intermediate connector; and
the ball is arranged in a through hole of the second connection element, in such a way that the ball is configured to protrude both from the inner connection surface and from the outer connection surface.

The balls and the groove ensure this engagement which cannot be released by water pressure. The fact that the ball is configured to protrude both from the inner connection surface and from the outer connection surface means that has a diameter which is greater than the thickness of the wall of the second connection element; the fact that it protrudes from one side, the other or both of them depends on the pressure exerted onto the ball.

In some particular embodiments, the elastic element is a spring.

A spring is a common element which exerts the required force against the intermediate connector when required.

In some particular embodiments, the inner connection surface and the first portion of the working tip have a circular cross section.

A circular cross section allows the circular rotation of the working tip with respect to the main body, which is useful to adjust the specific direction in which the water exits the irrigator.

In some particular embodiments,
the first engaging element is a complete circular groove;
the second engaging element comprises a plurality of balls configured to be partially inserted in the at least one portion of a groove, the balls being located at a distance from the main step which is greater than the distance between the interior step and the end of the intermediate connector; and
the balls are arranged in through holes of the second connection element, in such a way that each ball is configured to protrude both from the inner connection surface and from the outer connection surface.

This symmetry ensures a proper retention force and a complete groove allows a complete circular adjustment of the working tip.

In some particular embodiments, the inner connection surface or the first portion of the working tip comprises friction o-rings arranged to create a friction fitting between the inner connection surface and the first portion of the working tip.

Friction o-rings allow the control of the circular movement of the working tip with respect to the main body.

In some particular embodiments, the irrigator further comprises a tube connecting the exit of the fluid pneumatic atomizer with the fluid outlet. In some particular embodiments, both the fluid pneumatic atomizer and the fluid outlet comprise threaded portions for connecting the tube.

In some particular embodiments, the dental irrigator further comprises at least pressure reducer upstream the fluid pneumatic atomizer, arranged to reduce the pressure of the air jet and/or the water jet before entering the fluid pneumatic atomizer.

With individual pressure reducers, such as individual microvalves, a better adaptation is achieved, thus reducing mechanical requirements for the fluid pneumatic atomizer, which receives lower pressure jets.

In some particular embodiments, the mixing element is a chamber comprised in the working tip.

The chamber receives the water jet in a position which is close (less than 2 cm, particularly less than 1 cm) to the end of the working tip, thus allowing the mixture of the water and air to be formed within the chamber of the working tip.

The mixing of the water within the working tip chamber reduces the distance of travel for the mix from the device to the treated tooth or implant surface which in return enhances its efficiency.

In some particular embodiments, the fluid depressurizing element is configured to produce a combined jet with a pressure comprised between 60 and 140 kPa.

This pressure is particularly beneficial to avoid any dental affection, and for a proper care of brackets or any other implants. In the particular case of dental implants, treatment with high pressure water spray or spray comprising a mixture of water/air/micro particle materials (such as soda, erythritol, etc) may cause the release of titanium particles form the implant surface and initiate the cascade of low-grade inflammation through macrophages attraction/activation which in return leads to bone resorption. In case of teeth surfaces similar practices lead to surface alteration with the development of micro-cracks, irregular surface topography with pits and valleys, etc that lead to the formation of a surface that becomes amenable to bacteria colonization.

In some particular embodiments, the fluid depressurizing element comprises an air pressure adjuster and/or a water pressure adjuster.

A pressure adjuster allows the practitioner to select a particular pressure for the combined jet. Different dental chairs may have different air and/or water pressure outputs. With pressure adjusters, the practitioner is able to overcome the issues arising from this variability.

In some particular embodiments, the air pressure adjuster and/or the water pressure adjuster are accessible from outside the dental irrigator, thus being available for a user's access.

In some cases, the practitioner may need to modify the pressure regardless the supply conditions, so it is useful that this pressure adjuster is accessible. Thus, the practitioner may adaptat the combined jet to the particular features of the teeth of each patient, the presence of brackets, etc.

In some particular embodiments, the fluid depressurizing element comprises means for increasing or reducing the cross section of water pipes and/or air pipes.

This way of modifying the cross section of the pipes is an easy and reliable way of modifying the pressure in the air and water tubes.

In some particular embodiments, at least some portions of the irrigator are made out of materials that can be sterilized in an autoclave machine.

The description also provides a method for using a dental irrigator according to the claimed invention, said method not forming part of the claimed subject-matter, the method comprising the steps of
connecting the connection portion of the dental irrigator to a dental device, such as a dental chair, so that the connection portion receives an air flow and a water flow;
activating the fluid and air supply to the dental irrigator; and
using the dental irrigator to clean a dental surface.

In some particular embodiments, the step of using the dental irrigator to clean the dental surface comprises introducing the dental irrigator inside the mouth of a patient to clean a dental surface, such as teeth and/or dental implants and/or dental prostheses. In different particular embodiments, the step of using the dental irrigator to clean the dental surface comprises using the dental irrigator to clean a dental surface, such as dental implants and/or dental prostheses located outside the mouth of a patient.

The main use of the dental irrigator is intra-oral, since it is especially suitable for cleaning dental surfaces inside the mouth of the patient. However, once the irrigator is connected with a suitable device (e.g. dental chair) that can provide for air and water supply, the said irrigator can also be used extra-orally (e.g. dental chair-side) for proper cleaning of the surfaces of dental prosthetic components (e.g. healing abutments, cover screws, etc) prior to their installation in the patient's mouth. Since some of these components are re-usable between patients (after proper disinfection and sterilization protocols have been applied), it is sometimes necessary to clean them by removing organic remnants from their surface.

The treatment of the surfaces of these components with air/water jet irrigation as this jet is produced by the dental irrigator can eliminate this issue since it can remove these organic remnants.

This extra-oral method can be also applied to surgical tools. A first water-air cleaning is effective just after the tool has been used, better than waiting for them to be sterilized (this happens hours later, and the blood may dry on the surface of the tool). The treatment of the tools with the jet produced by the dental irrigator, prior to the initiation of the sterilization process, can efficiently and easily remove the blood and increase the safety and efficiency of proper disinfection/sterilization protocols of said tools prior to their use on other patients.

In some particular embodiments, the dental irrigator further comprises a connector, a handpiece and a working tip.

The irrigator comprises three conceptual elements (a connection portion, a fluid depressurizing element and a fluid outlet). However, the physical arrangement of these conceptual elements may be performed in many different ways, without limiting the invention.

In a standard embodiment, the connection portion coincides with a physical connector, the fluid depressurizing element is comprised within a physical handpiece and the fluid outlet is comprised in a physical working tip. In any of these cases, these physical parts may be combined in one, two or three separate parts (for example, the dental irrigator may be made of a single part, wherein the connector, the handpiece and the working tip are manufactured as a single part. In other embodiments, each physical element is manufactured separately and then assembled by some attachments (magnets, clipped joints, screws, rivets, glue, snap-fit joints or any other suitable means for a secure attachment of these physical elements). Each of these physical parts may be manufactured of a different material, but in other cases, the same material is used for all of them.

In other embodiments, the fluid depressurizing element may be comprised within the physical connector, or even in the physical working tip. This does not alter the spirit of the invention, which is that it comprises a connection portion, a fluid depressurizing element and an exit for the combined jet. The physical arrangement of the conceptual elements is not limited within the present invention (always requiring that the fluid mixer receives the water and air supply from the connection portion and provides a reduced-pressure combined jet to the fluid outlet.

In some particular embodiments, the dental irrigator further comprises at least one elastic o-ring located between the handpiece and at least one of the connector and the working tip.

These o-rings are intended to allow proper water and/or air sealing between the handpiece and at least one of the end parts (connector and working tip) during standard operation of said dental irrigator.

In some particular embodiments, the working tip is made out of elastomeric or other flexible material.

An adaptable working tip is advantageous for adapting to the morphology of the patient's tissue.

In some particular embodiments, the working tip has a straight or a curved shape.

In some particular embodiments, the fluid outlet comprised in the working tip is arranged to provide a fluid exit projected in the same direction as the tangent to the end of the working tip or in a different direction or in different directions.

In some particular embodiments, the fluid outlet comprised in the working tip has a shape of a circle, a semicircle, al ellipse, a spiderweb, a circle with at least one wing, a helix and/or a combination thereof.

A straight shape may be advantageous in some conditions, coupled with some of the shapes and orientations. A curved shape may be advantageous in other conditions, coupled with different shapes and orientations.

In some particular embodiments, the working tip comprises a chamber that is cylindrical or frustoconical, while the rest of the tip can have the same or a different shape.

In some particular embodiments, the dental irrigator further comprises a heater to increase the temperature of the water jet.

This is a useful feature since it can warm the water and produce a spray comprising a temperature that will reduce any cold sensitivity experienced by his/her teeth when the later receive the treatment.

In some particular embodiments, the dental irrigator further comprises a light source.

Apart of the advantage of having light and irrigation in a single device (not needing an external light source), the light direction is properly aligned with the working path of the device, making the whole process of operation easier.

In some particular embodiments, this light source is an electric light source, such as a LED or an halogen bulb. This means that the irrigator also comprises an electric supply for feeding the light source.

In other embodiments, the light source is an optic fibre light guide receiving light from an external element, such as the dental chair. In these cases, there is no need of any electric supply.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a view of a particular example of a complete dental irrigator according to the invention.
Figure 2 shows a different embodiment of a dental irrigator according to the invention.
Figure 3 shows a longitudinal cross section of the connection between the second connection element and the intermediate connector in an irrigator according to the invention.
Figure 4 shows the intermediate connector of a particular embodiment of a dental irrigator in its compressed position.
Figure 5 shows the same longitudinal cross section but when the tip portion is coupled to the main body.
Figure 6a shows different examples of the shape of the tip of a dental irrigator according to the invention.
Figure 6b shows different examples of the orientation of the exiting flow in the tip of a dental irrigator according to the invention.
Figure 7 shows examples of tips cross-sections in a dental irrigator according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

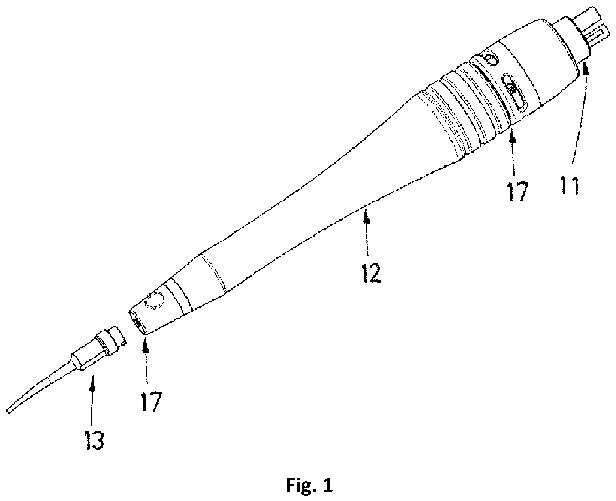

Figure 1 shows a view of a particular example of a complete dental irrigator according to the invention. This irrigator comprises a connector 11, a handpiece 12 and a working tip 13.

The irrigator comprises three conceptual elements (a connection portion 1, a fluid depressurizing element 4 and a fluid outlet 5). However, the physical arrangement of these conceptual elements may be performed in many different ways, without limiting the invention. This physical arrangement is shown in this figure.

In this particular embodiment, the connection portion coincides with a physical connector 11, the fluid depressurizing element is comprised within the connector 11 as well and the fluid outlet is comprised in the working tip 13.

Each physical element is manufactured separately and then assembled by some attachments (magnets, clipped joints, screws, rivets, glue, snap-fit joints or any other suitable means for a secure attachment of these physical elements). Each of these physical parts may be manufactured of a different material, but in other cases, the same material is used for all of them.

The working tip is made out of elastomeric or other flexible material, for adapting to the morphology of the patient's tissue.

In some cases, this device has heating means to increase the temperature of the water jet. If the water jet is too cold, it may cause discomfort in the patient, so a small heating resistance is provided to increase the temperature of the water jet, also increasing its effectiveness in cleaning the teeth.

This device may also have a light source, which is useful for the dental practitioner to have a better vision of what is happening inside the mouth of the patient. This light may be provided in two different ways. A first way is providing an electric supply in the device, so that an electric light source (such as a LED) located in the tip emits light which is enough for the dental practitioner to light the working zone. A different way of providing light is by an optic fibre, which receives light from the exterior and just directs it to the mouth of the patient. This is more expensive, but has the advantage of not needing any electrical supply.

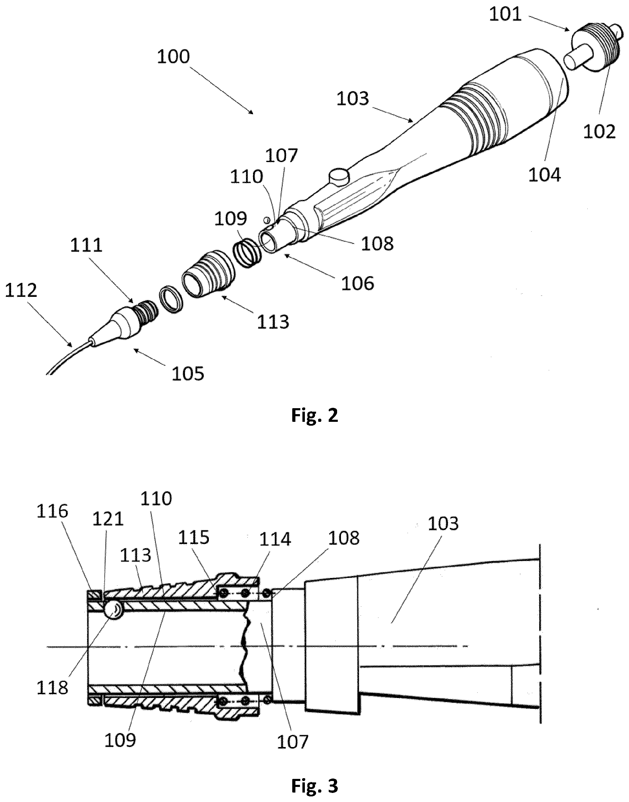

Figure 2 shows a different embodiment of a dental irrigator 100 according to the invention.

In this figure, a first perspective view of the disassembled irrigator is shown.

In this figure, a connection portion 101 is seen. This connection portion 101 comprises a water inlet 102. Further, the irrigator 100 comprises a main body 103, which is intended to be connected to the connection portion 101, and comprises a first end 104 and a second end 106. The first end 104 comprises a first connection element intended to be coupled to the connection portion 101 and the second end 106 is intended to be coupled to a working tip 105. Hence, the main body is configured to let water pass from the first end 104 to the second end 106.

This second end 106 of the main body 103 comprises a second connection element 107 which extends from a main step 108 of the main body until the edge of this main body 103. The second connection element 107 comprises an inner connection surface 109 and an outer connection surface 110. The inner connection surface 109 is intended to be coupled to the working tip 105, while the outer connection surface 110 is intended to interact with an intermediate connector 113.

The working tip 105 comprises a first portion 111, which is configured to be connected to the inner connection surface 109 and a second portion 112 configured to project the water outside the dental irrigator 100.

There is also an intermediate connector 113, which is arranged to manage the connection between the first portion of the working tip and the second connection element of the main body. Details of this element and this management will be explained in the following figures.

In this irrigator 100, water comes at a suitable pressure directly towards the water inlet. This suitable pressure is obtained by an external pump, which pumps water towards the irrigator. Hence, no air is used in this case, thus allowing the use of a higher pressure without the risk of causing emphysema.

Figure 3 shows a longitudinal cross section of the connection between the second connection element 107 and the intermediate connector 113 in an irrigator according to the invention.

The second connection element comprises a spring 114 which is arranged around the outer connection surface 110. This spring 114 is retained by the main step 108 of the main body and an interior step 115 located in the inner surface of the intermediate connector 113. Hence, the spring 114 exerts a force which intends to push the intermediate connector 113 further away from the main step 108 of the main body.

However, the second connection element 107 comprises a stop element 116 which prevents the intermediate connector 113 from escaping from the dental irrigator 100. This stop element 116 is an o-ring which is arranged on the outer connection surface 110 after the intermediate connector 113 is set into place.

As may be seen in this figure, the length of the outer connection surface 110 is greater than the distance between the interior step 115 and the end 121 of the intermediate connector 113. This is done on purpose, so that the intermediate connector may be forced against the spring force until reaching the main step.

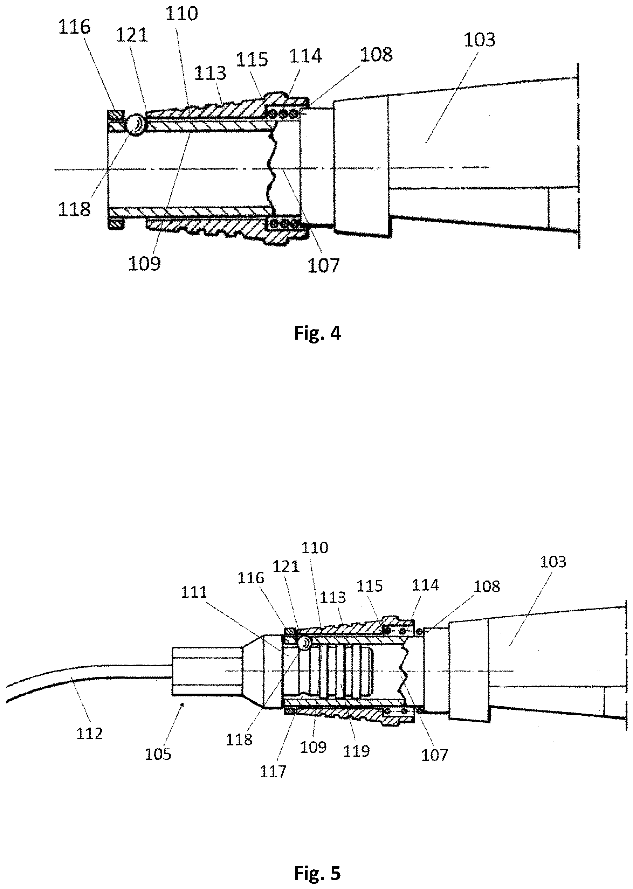

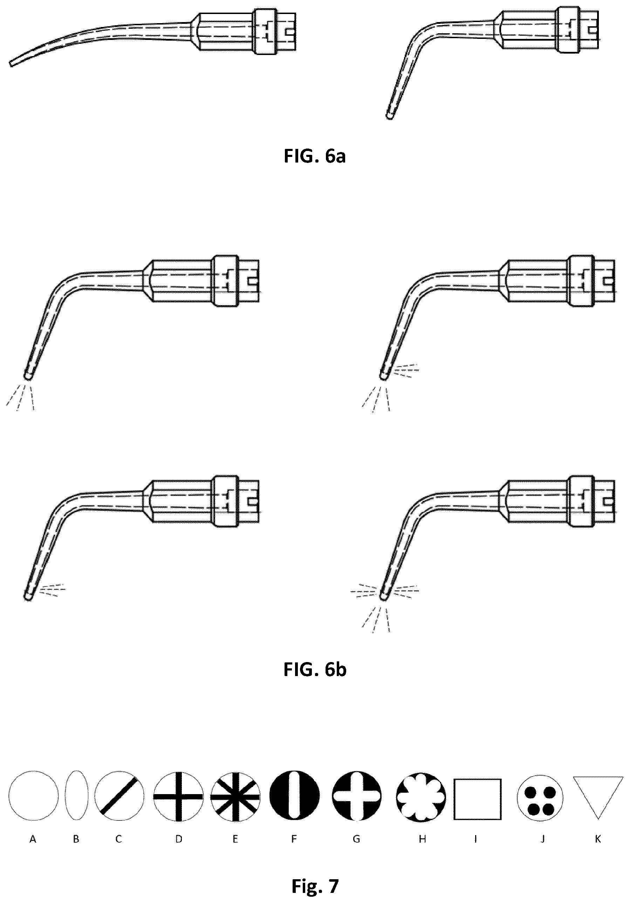

Figure 4 shows the intermediate connector 113 in this compressed position. Since the length of the outer connection surface 110 is greater than the distance between the interior step 115 and the end 121 of the intermediate connector 113, when the intermediate connector 113 presses the spring 114 until stopping at the main step 108, there is a free space between the end 121 of the intermediate connector 113 and the stop element 116. In this space, the second connection element comprises a plurality of balls 118. In this case, there are three balls; since the figure shows a transverse section, only one is seen. These balls 118 are located in the free space, i.e., at a distance from the main step 108 which is greater than the distance between the interior step 115 and the end 121 of the intermediate connector 113. The balls 118 are arranged in through holes of the second connection element 107, in such a way that each ball 118 can protrude both from the inner connection surface 109 and from the outer connection surface 110. When the intermediate connector 113 is arranged in this compressed position (as shown in Fig. 7), the balls 118 are free to move, but when the intermediate connector 113 is released and displaced until the stop element 116 by the spring force, the balls 118 cannot protrude from the outer connection surface 110, and are forced to protrude from the inner connection surface 109.

Figure 5 shows the same longitudinal cross section but when the tip portion is coupled to the main body.

In this case, the operation would be the following: the intermediate connector 113 is forced against the main step108, as in figure 8. Then, the balls 118 are released, and can move freely. In this situation, the working tip 105 is introduced inside the second connection element 107. This first portion 111 of the working tip 105 comprises a groove 117, which is arranged in place, so that, when the intermediate connector 113 is released, the balls 118 are forced inside the groove 117, thus retaining the working tip 105 in position. Since the inner connection surface 109 and the first portion 111 of the working tip 105 have a circular section, the retention does not prevent the tip portion 105 from a circular movement with respect to the main body 103.

To control the circular rotation, there are some friction o-rings 119 arranged on the first portion 111 of the working tip 105. In other embodiments, these friction o-rings may be arranged on the inner connection surface 109. In any case, the aim of these rings 119 is to create a friction fitting between the inner connection surface 109 and the first portion 111 of the working tip 105. Thus, rotation is allowed, but in a controlled way.

Finally, at least some of the parts of the irrigator are made out of materials that may be sterilized in an autoclave machine. These parts are assembled by the interposition of elastic o-rings, which ensure water and air tightness of the device.

Figure 6a shows different examples of the shape of the tip. As shown in this figure, the working tip may have a soft bend or a strongly curved shape. Other shapes are also possible within the scope of the invention.

Figure 6b shows different examples of the orientation of the exiting flow.

As seen in this figure, in some cases, the fluid outlet comprised in the working tip is arranged to provide a fluid exit projected in the same direction as the tangent to the end of the working tip or in a different direction or in different directions.

A straight shape may be advantageous in some conditions, coupled with some of the shapes and orientations. A curved shape may be advantageous in other conditions, coupled with different shapes and orientations.

Figure 7 shows examples of tips cross-sections.

As may be seen in this figure, the fluid outlet comprised in the working tip has a shape of a circle (A), a semicircle, an ellipse (B), a circle with at least one wing (C, D), a spiderweb (E), one or more bands (F, G), a helix (H), a square (I), a circle with obstacles (J), a triangle (K) or a combination thereof.

## Claims

1. Dental irrigator (100) comprising
a connection portion (101) comprising a water inlet (102) and no air inlets;
a main body (103) comprising a first end (104) with a first connection element configured to couple with the connection portion (101) and a second end (106) opposite to the first end (104), the second end (106) comprising a second connection element (107) which extends from a main step (108) of the main body (103), the second connection element (107) comprising an inner connection surface (109) and an outer connection surface (110), the main body (103) being configured to let water pass from the first end (104) to the second end (106);
a working tip (105), the working tip (105) comprising a first portion (111) configured to be connected to the inner connection surface (109) and a second portion (112) with a fluid outlet, configured to project the water outside the dental irrigator (100), wherein the fluid outlet is arranged to provide a fluid exit projected in one or more different directions from the tangent to the end of the working tip; wherein the working tip (105) is made out of elastomeric material and has a blind end and a lateral orifice; and
an intermediate connector (113), arranged to manage the connection between the first portion (111) of the working tip (105) and the second connection element (107) of the main body (103);
wherein
the dental irrigator (100) further comprises an elastic element (114) arranged around the outer connection surface (110);
the second connection element (107) of the main body (103) comprises a stop element (116) which prevents the intermediate connector (113) from escaping from the dental irrigator (100);
the intermediate connector (113) comprises an interior step (115) configured to receive the elastic element (114) and an end (121) intended to be abutted against the stop element (116), the interior step (115) being oriented so that the elastic element (114) exerts a force which intends to push the intermediate connector (113) towards the stop element (116);
the length of the outer connection surface (110) is greater than the distance between the interior step (115) and the end (121) of the intermediate connector (113);
the first portion (111) of the working tip (105) comprises a first engaging element (117); and
the second connection element (107) further comprises at least one second engaging element (118) configured to engage with the first engaging element (117).

2. Dental irrigator (100) according to claim 1, wherein
the first engaging element is at least a portion of a groove (117);
the second engaging element is at least one ball (118) configured to be partially inserted in the at least one portion of a groove (117), the ball (118) being located at a distance from the main step (108) which is greater than the distance between the interior step (115) and the end (121) of the intermediate connector (113).

3. Dental irrigator (100) according to any of the preceding claims, wherein the elastic element is a spring (114).

4. Dental irrigator (100) according to any of the preceding claims, wherein the inner connection surface (109) and the first portion (111) of the working tip (105) have a circular cross section.

5. Dental irrigator (100) according to claim 4, wherein
the first engaging element is a complete circular groove (117);
the second engaging element comprises a plurality of balls (118) configured to be partially inserted in the circular groove (117), the balls (118) being located at a distance from the main step which is greater than the distance between the interior step (115) and the end (121) of the intermediate connector (113);
the balls (118) are arranged in through holes of the second connection element, in such a way that each ball (118) is configured to protrude both from the inner connection surface (109) and from the outer connection surface (110).

6. Dental irrigator (100) according to any of the preceding claims, wherein the inner connection surface or the first portion (111) of the working tip (105) comprises friction o-rings (119) arranged to create a friction fitting between the inner connection surface (109) and the first portion (111) of the working tip (105).

7. Dental irrigator according to any of the preceding claims, wherein the working tip (13) has a straight or a curved shape.

8. Dental irrigator according to any of the preceding claims, wherein the fluid outlet (5) comprised in the working tip (13) has a shape of a circle, a semicircle, al ellipse, a spiderweb, a circle with at least one wing, a helix and/or a combination thereof.

9. Dental irrigator according to any of the preceding claims, wherein the working tip (13) comprises a chamber (8) that is cylindrical or frustoconical, while the rest of the tip can have the same or a different shape.

10. Dental irrigator according to any of the preceding claims, further comprising a heater to increase the temperature of the water jet.

11. Dental irrigator according to any of the preceding claims, further comprising a light source.

12. Dental irrigator according to any of the preceding claims, wherein at least some portions of the irrigator are made of materials that can be sterilized in an autoclave machine.

## Patentansprüche

1. -. Zahnspüler (100), umfassend
einen Verbindungsabschnitt (101), umfassend einen Wassereinlass (102) und keine Lufteinlässe;
einen Hauptkörper (103), umfassend ein erstes Ende (104) mit einem ersten Verbindungsbauteil, das konfiguriert ist, um mit dem Verbindungsabschnitt (101) gekoppelt zu sein, und ein dem ersten Ende (104) gegenüberliegendes zweites Ende (106), wobei das zweite Ende (106) ein zweites Verbindungsbauteil (107) umfasst, das sich von einer Hauptstufe (108) des Hauptkörpers (103) erstreckt, wobei das zweite Verbindungsbauteil (107) eine innere Verbindungsfläche (109) und eine äußere Verbindungsfläche (110) umfasst, wobei der Hauptkörper (103) konfiguriert ist, um Wasser vom ersten Ende (104) zum zweiten Ende (106) durchzulassen;
eine Arbeitsspitze (105), wobei die Arbeitsspitze (105) einen ersten Abschnitt (111) umfasst, der konfiguriert ist, um mit der inneren Verbindungsfläche (109) verbunden zu werden, sowie einen zweiten Abschnitt (112) mit einem Fluidauslass, der konfiguriert ist, um das Wasser aus dem Zahnspüler (100) nach außen zu leiten, wobei der Fluidauslass so angeordnet ist, dass er einen Fluidaustritt bereitstellt, der in eine oder mehrere verschiedene Richtungen von der Tangente zum Ende der Arbeitsspitze projiziert wird; wobei die Arbeitsspitze (105) aus einem elastomeren Material besteht und ein blindes Ende sowie eine seitliche Öffnung aufweist; sowie
einen Zwischenverbinder (113), der so angeordnet ist, dass er die Verbindung zwischen dem ersten Abschnitt (111) der Arbeitsspitze (105) und dem zweiten Verbindungsbauteil (107) des Hauptkörpers (103) herstellt; wobei
der Zahnspüler (100) weiter ein elastisches Element (114) umfasst, das um die äußere Verbindungsfläche (110) herum angeordnet ist;
das zweite Verbindungsbauteil (107) des Hauptkörpers (103) ein Anschlagelement (116) umfasst, das verhindert, dass der Zwischenverbinder (113) aus dem Zahnspüler (100) herausrutscht;
der Zwischenverbinder (113) eine innere Stufe (115), die konfiguriert ist, um das elastischen Elements (114) aufzunehmen, und ein Ende (121) umfasst, das dazu bestimmt ist, an das Anschlagelement (116) anzuliegen, wobei die innere Stufe (115) so ausgerichtet ist, dass das elastische Element (114) eine Kraft ausübt, die darauf abzielt, den Zwischenverbinder (113) in Richtung des Anschlagelements (116) zu drücken;
die Länge der äußeren Verbindungsfläche (110) größer als die Distanz zwischen der inneren Stufe (115) und dem Ende (121) des Zwischenverbinders (113) ist;
der erste Abschnitt (111) der Arbeitsspitze (105) ein erstes Eingriffselement (117) umfasst; und
das zweite Verbindungsbauteil (107) weiter mindestens ein zweites Eingriffselement (118) umfasst, das konfiguriert ist, um mit dem ersten Eingriffselement (117) einzugreifen.

2. -. Zahnspüler (100) nach Anspruch 1, wobei
das erste Eingriffselement mindestens ein Abschnitt einer Nut (117) ist;
das zweite Eingriffselement mindestens eine Kugel (118) ist, die konfiguriert ist, um teilweise in den mindestens einen Abschnitt einer Nut (117) eingeführt zu werden, wobei die Kugel (118) in einer Distanz von der Hauptstufe (108) angeordnet ist, die größer ist als die Distanz zwischen der inneren Stufe (115) und dem Ende (121) des Zwischenverbinders (113).

3. -. Zahnspüler (100) nach einem der vorstehenden Ansprüche, wobei das elastische Element eine Feder (114) ist.

4. -. Zahnspüler (100) nach einem der vorstehenden Ansprüche, wobei die innere Verbindungsfläche (109) und der erste Abschnitt (111) der Arbeitsspitze (105) einen kreisförmigen Querschnitt aufweisen.

5. -. Zahnspüler (100) nach Anspruch 4, wobei
das erste Eingriffselement eine vollständig kreisförmige Nut (117) ist;
das zweite Eingriffselement eine Vielzahl von Kugeln (118) umfasst, die konfiguriert sind, um teilweise in die kreisförmige Nut (117) eingeführt zu werden, wobei die Kugeln (118) in einer Distanz von der Hauptstufe angeordnet sind, die größer ist als die Distanz zwischen der inneren Stufe (115) und dem Ende (121) des Zwischenverbinders (113);
die Kugeln (118) in Durchgangslöchern des zweiten Verbindungsbauteils so angeordnet sind, dass jede Kugel (118) derart konfiguriert ist, dass sie sowohl aus der inneren Verbindungsfläche (109) als auch aus der äußeren Verbindungsfläche (110) herausragt.

6. -. Zahnspüler (100) nach einem der vorstehenden Ansprüche, wobei die innere Verbindungsfläche oder der erste Abschnitt (111) der Arbeitsspitze (105) Reibungs-O-Ringe (119) umfasst, die so angeordnet sind, dass sie ein Passspiel zwischen der inneren Verbindungsfläche (109) und dem ersten Abschnitt (111) der Arbeitsspitze (105) erzeugen.

7. -. Zahnspüler nach einem der vorstehenden Ansprüche, wobei die Arbeitsspitze (13) eine gerade oder eine gekrümmte Form aufweist.

8. -. Zahnspüler nach einem der vorstehenden Ansprüche, wobei der in der Arbeitsspitze (13) enthaltene Fluidauslass (5) die Form eines Kreises, eines Halbkreises, einer Ellipse, eines Spinnennetzes, eines Kreises mit mindestens einem Flügel, einer Helix und/oder einer Kombination davon umfasst.

9. -. Zahnspüler nach einem der vorstehenden Ansprüche, wobei die Arbeitsspitze (13) eine Kammer (8) umfasst, die zylindrisch oder kegelstumpfförmig ist, während der Rest der Spitze dieselbe oder eine andere Form aufweisen kann.

10. -. Zahnspüler nach einem der vorstehenden Ansprüche, der weiter eine Heizung zum Erhöhen der Temperatur des Wasserstrahls umfasst.

11. -. Zahnspüler nach einem der vorstehenden Ansprüche, der weiter eine Lichtquelle umfasst.

12. -. Zahnspüler nach einem der vorstehenden Ansprüche, wobei mindestens einige Abschnitte des Spülers aus Materialien bestehen, die in einem Autoklav sterilisiert werden können.

## Revendications

1. -. Irrigateur dentaire (100) comprenant
une partie de liaison (101) comprenant une entrée d'eau (102) et aucune entrée d'air ;
un corps principal (103) comprenant une première extrémité (104) avec un premier élément de liaison conçu pour se coupler avec la partie de liaison (101) et une seconde extrémité (106) en regard de la première extrémité (104), la seconde extrémité (106) comprenant un second élément de liaison (107) qui s'étend à partir d'une marche principale (108) du corps principal (103), le second élément de liaison (107) comprenant une surface de liaison interne (109) et une surface de liaison externe (110), le corps principal (103) étant conçu pour laisser passer l'eau de la première extrémité (104) à la seconde extrémité (106) ;
une pointe de travail (105), la pointe de travail (105) comprenant une première partie (111) conçue pour être reliée à la surface de liaison interne (109) et une seconde partie (112) munie d'une sortie de fluide, conçue pour projeter l'eau hors de l'irrigateur dentaire (100), dans lequel la sortie de fluide est agencée de manière à fournir une sortie de fluide projetée dans une ou plusieurs directions différentes par rapport à la tangente à l'extrémité de la pointe de travail ; dans lequel la pointe de travail (105) est fabriquée d'un matériau élastomère et a une extrémité borgne et un orifice latéral ; et
un élément de liaison intermédiaire (113), conçu pour assurer la liaison entre la première partie (111) de la pointe de travail (105) et le second élément de liaison (107) du corps principal (103) ; dans lequel
l'irrigateur dentaire (100) comprend en outre un élément élastique (114) agencé autour de la surface de liaison externe (110) ;
le second élément de liaison (107) du corps principal (103) comprend un élément d'arrêt (116) qui empêche l'élément de liaison intermédiaire (113) de s'échapper de l'irrigateur dentaire (100) ;
l'élément de liaison intermédiaire (113) comprend une marche intérieure (115) conçue pour recevoir l'élément élastique (114) et une extrémité (121) destinée à venir en butée contre l'élément d'arrêt (116), la marche intérieure (115) étant orientée de sorte que l'élément élastique (114) exerce une force qui vise à pousser l'élément de liaison intermédiaire (113) vers l'élément d'arrêt (116) ;
la longueur de la surface de liaison externe (110) est supérieure à la distance entre la marche intérieure (115) et l'extrémité (121) de l'élément de liaison intermédiaire (113) ;
la première partie (111) de la pointe de travail (105) comprend un premier élément de mise en prise (117) ; et
le second élément de liaison (107) comprend en outre au moins un second élément de mise en prise (118) conçu pour venir en prise avec le premier élément de mise en prise (117).

2. -. Irrigateur dentaire (100) selon la revendication 1, dans lequel
le premier élément de mise en prise est au moins une partie d'une rainure (117) ;
le second élément de mise en prise est au moins une bille (118) conçue pour être partiellement insérée dans l'au moins une partie d'une rainure (117), la bille (118) étant située à une distance de la marche principale (108) qui est supérieure à la distance entre la marche intérieure (115) et l'extrémité (121) de l'élément de liaison intermédiaire (113).

3. -. Irrigateur dentaire (100) selon l'une quelconque des revendications précédentes, dans lequel l'élément élastique est un ressort (114).

4. -. Irrigateur dentaire (100) selon l'une quelconque des revendications précédentes, dans lequel la surface de liaison interne (109) et la première partie (111) de la pointe de travail (105) ont une section transversale circulaire.

5. -. Irrigateur dentaire (100) selon la revendication 4, dans lequel
le premier élément de mise en prise est une rainure circulaire complète (117) ;
le second élément de mise en prise comprend une pluralité de billes (118) conçues pour être partiellement insérées dans la rainure circulaire (117), les billes (118) étant situées à une distance de la marche principale qui est supérieure à la distance entre la marche intérieure (115) et l'extrémité (121) de l'élément de liaison intermédiaire (113) ;
les billes (118) sont agencées dans des trous traversants du second élément de liaison, de telle sorte que chaque bille (118) soit conçue pour faire saillie à la fois de la surface de liaison interne (109) et de la surface de liaison externe (110).

6. -. Irrigateur dentaire (100) selon l'une quelconque des revendications précédentes, dans lequel la surface de liaison interne ou la première partie (111) de la pointe de travail (105) comprend des joints toriques de friction (119) agencés pour créer un ajustement serré entre la surface de liaison interne (109) et la première partie (111) de la pointe de travail (105).

7. -. Irrigateur dentaire selon l'une quelconque des revendications précédentes, dans lequel la pointe de travail (13) a une forme droite ou incurvée.

8. -. Irrigateur dentaire selon l'une quelconque des revendications précédentes, dans lequel la sortie de fluide (5) comprise dans la pointe de travail (13) a la forme d'un cercle, d'un demi-cercle, d'une ellipse, d'une toile d'araignée, d'un cercle avec au moins une aile, d'une hélice et/ou de leur combinaison.

9. -. Irrigateur dentaire selon l'une quelconque des revendications précédentes, dans lequel la pointe de travail (13) comprend une chambre (8) qui est cylindrique ou tronconique, tandis que le reste de la pointe peut avoir la même forme ou une forme différente.

10. -. Irrigateur dentaire selon l'une quelconque des revendications précédentes, comprenant en outre un dispositif de chauffage pour augmenter la température du jet d'eau.

11. -. Irrigateur dentaire selon l'une quelconque des revendications précédentes, comprenant en outre une source lumineuse.

12. -. Irrigateur dentaire selon l'une quelconque des revendications précédentes, dans lequel au moins certaines parties de l'irrigateur sont composées de matériaux pouvant être stérilisés dans un autoclave.
